# EUROPEAN PATENT APPLICATION

(11) **EP 4 601 263 A1**
(43) Date of publication of application: **13.08.2025**
(21) Application number: 23890458.5
(22) Date of filing: 12.10.2023
(51) Int. Cl.: H04L 67/141

(54) **SESSION ESTABLISHMENT METHOD AND APPARATUS, ELECTRONIC DEVICE AND STORAGE MEDIUM**

(30) Priority: 15.11.2022 CN 202211426650
(71) Applicant: ZTE CORPORATION, Shenzhen, Guangdong 518057 (CN)
(72) Inventor: LI, Changyi, Shenzhen, Guangdong 518057 (CN); WANG, Qianchun, Shenzhen, Guangdong 518057 (CN); XIA, Kai, Shenzhen, Guangdong 518057 (CN); GAO, Xiang, Shenzhen, Guangdong 518057 (CN)
(74) Representative: Ziebig Hengelhaupt Intellectual Property Attorneys Patentanwaltskanzlei PartGmbB
(86) International application number: PCT/CN2023/124331
(87) International publication number: WO 2024/104021

(57) **Abstract**

The present application relates to the technical field of communications, and discloses a session establishment method and apparatus, an electronic device and a storage medium. The method includes: receiving an establishment request message of a second packet forwarding control protocol (PFCP) session, wherein the establishment request message of the second PFCP session carries information of a first PFCP session, and the first PFCP session and the second PFCP session have an association relationship; according to the information of the first PFCP session, determining a first packet forwarding unit (PFU) in a UPF corresponding to the first PFCP session; determining the first PFU as a second PFU in a UPF corresponding to the second PFCP session; and sending an establishment response message of the second PFCP session carrying information of the second PFU.

## Description

### CROSS REFERENCE TO RELATED APPLICATION

This application claims priority to Chinese Patent Application No. 202211426650.3 filed on November 15, 2022, entitled "Session establishment method and apparatus, electronic device and storage medium", the entirety of which is incorporated herein by reference.

### TECHNICAL FIELD

The present application relates to the field of communications, and in particular to a session establishment method and apparatus, an electronic device and a storage medium.

### BACKGROUND

In an application of implementing user plane function (UPF) service diversion, the forwarding of a data packet is a core function of a UPF network element, the UPF not only processes a data packet for accessing public network services, but also processes or forwards a data packet for accessing private network services. For the solution of forwarding of a data packet in the related art, it is required that each private network data packet that needs to be forwarded must be processed and forwarded by two sessions in a UPF network element, in the UPF network element, the two sessions used to process and forward a private network data packet correspond to different packet forwarding units, that is to say, in the UPF network element, a private network data packet needs to be processed and forwarded by two packet forwarding units, which means that there is forwarding of a private network data packet within the UPF network element.

However, in the presence of massive private network data packets, if each private network data packet is forwarded within a UPF network element, it will cause a sharp consumption of internal performance of the UPF network element, resulting in serious performance loss of the UPF network element.

### SUMMARY

The embodiments of the present application provide a session establishment method and apparatus, an electronic device and a storage medium, which can solve the problem of serious performance loss of UPF network elements.

In a first aspect, an embodiment of the present application provides a session establishment method, the method includes: receiving an establishment request message of a second packet forwarding control protocol (PFCP) session, wherein the establishment request message of the second PFCP session carries information of a first PFCP session, and the first PFCP session and the second PFCP session have an association relationship; determining a first packet forwarding unit (PFU) in a UPF corresponding to the first PFCP session according to the information of the first PFCP session; determining the first PFU as a second PFU in a UPF corresponding to the second PFCP session; and sending an establishment response message of the second PFCP session carrying information of the second PFU.

In a second aspect, an embodiment of the present application provides a session establishment apparatus, the apparatus includes: a receiving module for receiving an establishment request message of a second packet forwarding control protocol (PFCP) session, wherein the establishment request message of the second PFCP session carries information of a first PFCP session, and the first PFCP session and the second PFCP session have an association relationship; a determining module for determining a first packet forwarding unit (PFU) in a UPF corresponding to the first PFCP session according to the information of the first PFCP session; an executing module for determining the first PFU as a second PFU in a UPF corresponding to the second PFCP session; and a sending module for sending an establishment response message of the second PFCP session carrying information of the second PFU.

In a third aspect, an embodiment of the present application provides an electronic device, the electronic device includes a processor, a memory, and a program or instruction that is stored on the memory and is executable on the processor, and the program or instruction, when executed by the processor, implements the steps of the method of the first aspect.

In a fourth aspect, an embodiment of the present application provides a readable storage medium, the readable storage medium stores a program or instruction thereon, and the program or instruction, when executed by the processor, implements the steps of the method of the first aspect.

### BRIEF DESCRIPTION OF DRAWINGS

FIG. 1 is a schematic flow chart of a session establishment method provided by an embodiment of the present application;
FIG. 2 is a schematic diagram of packet transmission provided by an embodiment of the present application;
FIG. 3 is a schematic diagram of a process of accessing a private network service provided by an embodiment of the present application;
FIG. 4 is a schematic structural diagram of a session establishment apparatus provided by an embodiment of the present application; and
FIG. 5 is a schematic structural diagram of an electronic device provided by an embodiment of the present application.

### DETAILED DESCRIPTION

Technical solutions in embodiments of the application will be described clearly and thoroughly below with reference to the accompanying drawings in embodiments of the application. Obviously, the embodiments described are part of the embodiments of the application rather than all of the embodiments. All other embodiments obtained by a person skilled in the art without creative work based on embodiments in the application fall within the scope of the application.

The terms "first", "second", and the like in the description and in the claims of the application are used to distinguish between similar objects rather than describing a specific order or a sequence. It is to be understood that data used in such a way may be interchanged where appropriate, whereby embodiments of the application can be implemented in an order other than those illustrated or described herein, the objects distinguished by "first", "second", etc., are generally of one type, and the number of objects is not limited, for example, a first object may refer to one or more first objects. In addition, "and/or" in the description and claims indicates at least one of the objects connected therewith, and the character "/" generally indicates that the objects associated therewith are in an "or" relationship.

The session establishment method and apparatus, electronic device and storage medium provided by embodiments of the application will be described in detail below by specific embodiments and application scenarios thereof with reference to the accompanying drawings.

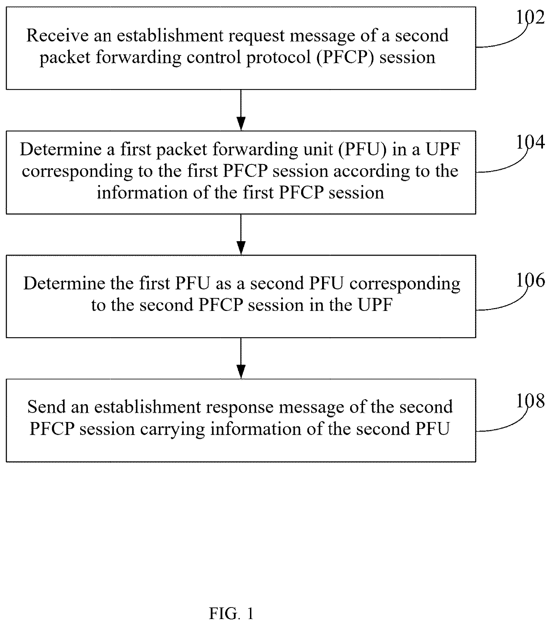

FIG. 1 shows a session establishment method provided by one embodiment of the present application, the method may be performed by a user plane function (UPF) device, etc. In other words, the method may be performed by a software or hardware installed on the UFP device, and the method includes the following steps.

Step 102: an establishment request message of a second packet forwarding control protocol (PFCP) session is received.

Specifically, after a user equipment (UE) initiates an request for accessing a private network service, a session management function (SMF) may request a policy control function (PCF) to issue policy information, after receiving the request sent by the SMF, the PCF may issue the policy information to the SMF, wherein the policy information includes relevant information for supporting a private network service, after receiving the policy information issued by the PCF, the SMF may then initiate a user plane establishment request to establish a UPF, the UPF is used to process and forward public network service packets and private network service packets, after the establishment is successful, the UPF may send a successful establishment response message to the SMF.

After the user equipment initiates a request for accessing a private network service, since the private network service packet initiated by the user equipment for accessing a private network service needs to be transmitted by a public network session before reaching the UPF, a public network session needs to be established in the UPF to receive the private network service packet, the UPF may receive an establishment request of a first packet forwarding control protocol (PFCP) session sent by the SMF, and establish a first PFCP session in the UPF, the first PFCP session is used to receive and forward public network service packets, and may also be used to receive private network service packets.

The UPF may receive an establishment request message of a second PFCP session sent by the SMF and establish a second PFCP session, the second PFCP session is a private network session used to forward a private network service packet, wherein the establishment request message of the second PFCP session carries information of the first PFCP session, and the UPF will establish the second PFCP session according to the information of the first PFCP session, therefore, the first PFCP session and the second PFCP session have an association relationship.

Step 104: a first packet forwarding unit (PFU) in a UPF corresponding to the first PFCP session is determined according to the information of the first PFCP session.

Specifically, the UPF consists of a plurality of packet forward units (PFU), each PFCP session may correspond to one PFU with a preset algorithm according to a session endpoint identifier (Seid), when each PFCP session forwards a packet, the packet is processed and forwarded at the PFU where the PFCP session is located.

In an embodiment of the present application, the information of the first PFCP session may include a Seid corresponding to the first PFCP session or other information that may be used to identify the PFU corresponding to the first PFCP session, the information of the first PFCP session is not specifically limited here, therefore, the UPF may determine the first PFU corresponding to the first PFCP session in the UPF according to the information of the first PFCP session.

Step 106: the first PFU is determined as a second PFU corresponding to the second PFCP session in the UPF.

Specifically, after the first PFU corresponding to the first PFCP session is determined in the UPF, the first PFU may be determined as the second PFU corresponding to the second PFCP session, and the second PFCP session may be established on the second PFU, the second PFCP session is used to process and forward a private network service packet.

Step 108: an establishment response message of the second PFCP session carrying information of the second PFU is sent.

Specifically, after the second PFCP session is established, the UPF may send to the SMF an establishment response message of the second PFCP session carrying information of the second PFU, so as to indicate that the establishment of the second PFCP session in the UPF is completed.

In an embodiment of the present application, an establishment request message of a second packet forwarding control protocol (PFCP) session is received, the establishment request message of the second PFCP session carries information of a first PFCP session, and the first PFCP session and the second PFCP session have an association relationship; a first packet forwarding unit (PFU) in the UPF corresponding to the first PFCP session is determined according the information of the first PFCP session; the first PFU is determined as a second PFU corresponding to second PFCP session in the UPF; and an establishment response message of the second PFCP session carrying information of the second PFU is sent, as a result, the first PFCP session for receiving private network service packets and the second PFCP session for sending private network service packets are on the same PFU, and the reception and forwarding of private network service packets are both performed on the same PFU, thereby avoiding the forwarding of private network service packets within the UPF, which in turns avoids loss within the UPF, solves the problem of serious performance loss of the UPF, and improves the performance of the UPF.

In one implementation, a first field in the information of the first PFCP session is used to indicate that a second field of the first PFCP session is associated with a third field of the second PFCP session.

Specifically, the SMF sends to the UPF the information of the first PFCP session carried in the establishment request message of the second PFCP session, wherein the information of the first PFCP session includes a first field, the first field may include the second field of the first PFCP session, and the second field may be a Seid corresponding to the first PFCP session, or other fields that may determine the PFU corresponding to the first PFCP session. In this way, in the case where the UPF receives the establishment request message of the second PFCP session, the UPF may find the PFU corresponding to the first PFCP session according to the second field that corresponds to the first PFCP session, and establish the second PFCP session on the PFU corresponding to the first PFCP session, as a result, the third field corresponding to the second PFCP session also corresponds to the PFU corresponding to the first PFCP session, that is, the second field of the first PFCP session is associated with the third field of the second PFCP session, and the first PFCP session and the second PFCP session are established on the same PFU.

Specifically, the first field in the information of the first PFCP session is used to indicate that the second field of the first PFCP session is associated with the third field of the second PFCP session, so that the first PFCP session and the second PFCP session established by the UPF are on the same PFU, and the reception and forwarding of private network service packets are both performed on the same PFU, thereby avoiding the forwarding of private network service packets within the UPF, which in turns avoids loss within the UPF, solves the problem of serious performance loss of the UPF, and improves the performance of the UPF.

In one implementation, the first PFCP session is a public network PFCP session of a user, and the second PFCP session is a private network PFCP session of the user.

Specifically, the above-mentioned first PFCP session may be a public network PFCP session, that is, in a UPF, a service request packet sent by a user may be received by the first PFCP session, in the case where the service request initiated by a user is a public network service request, a public network service packet of the public network service request may be received by the first PFCP session, and the public network service packet may be transmitted to the public network by a N6 interface. The above-mentioned second PFCP session may be a private network PFCP session of a user, by establishing the first PFCP session and the second PFCP session on the same PFU, a private network service packet sent by a user equipment may be received by the first PFCP session, and the private network service request packet may be forwarded to the private network by the second PFCP session, thereby avoiding the forwarding of private network service packets within the UPF, which in turns avoids loss within the UPF, solves the problem of serious performance loss of the UPF, and improves the performance of the UPF.

In one implementation, before receiving the establishment request message of the second packet forwarding control protocol (PFCP) session, the method further includes: receiving a detection rule for identifying a private network service; receiving a service packet sent by the user; and sending a target notification to a session management function (SMF) where the service packet sent by the user matches the detection rule, the establishment request message of the second PFCP session is sent by the SMF after receiving the target notification.

Specifically, the PCF may issue policy information to the SMF after receiving the request sent by the SMF, wherein the policy information includes relevant information for supporting private network services. After receiving the policy information issued by the PCF, the SMF will construct a detection rule according to the relevant information for supporting private network services in the policy information, the detection rule is used to identify services of a private network. Therefore, when establishing a UPF, the UPF may receive the detection rule, in the case where a service packet sent by a user equipment is received, the UPF may match the detection rule with the service packet so as to determine the private network service to be accessed by the user. If the matching is successful, the private network service to be accessed by the user is determined, the UPF may send a target notification to the SMF, so as to notify the SMF that there is a private network service packet sent by the user, after receiving the notification, the SMF determines that the private network service packet needs to be forwarded, and sends the establishment request message of the second PFCP session to the UPF.

In this way, the detection rule for identifying a private network service is received; the service packet sent by the user is received; and a target notification is sent to a session management function (SMF) where the service packet sent by user matches the detection rule, and the establishment request message of second PFCP session is sent by the SMF after receiving the target notification, which can accurately identify whether the user accesses the private network service, in the case where the service packet sent by the user is determined as a private network service, a second PFCP session is established so as to forward a private network service packet, so as to enable the user to access the private network service.

In one implementation, the service packet is forwarded by the second PFCP session.

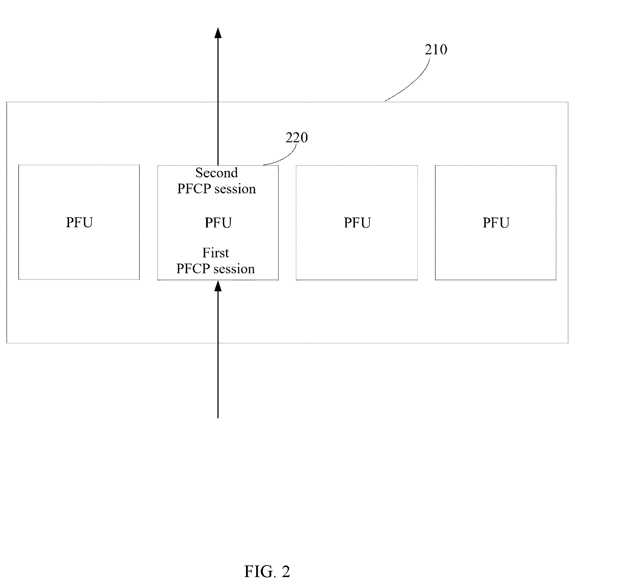

Specifically, after the second PFCP session is established, in the case where the service packet received by the first PFCP is a private network service packet, the service packet may be forwarded by the second PFCP session. FIG. 2 shows a schematic diagram of packet transmission provided by an embodiment of the present application, as shown in FIG. 2, the UPF 210 includes a plurality of PFUs, since the second PFCP session and the first PFCP session for receiving service packets are both established on the same PFU 220, the reception and forwarding of private network service packets are both performed on the same PFU, thereby avoiding the forwarding of private network service packets within the UPF, which in turns avoids loss within the UPF, solves the problem of serious performance loss of the UPF, and improves the performance of the UPF.

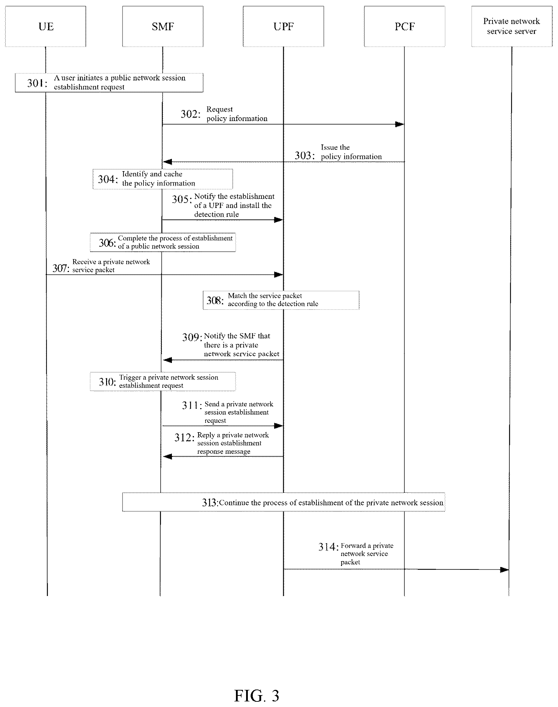

FIG. 3 is a schematic diagram of a process of accessing a private network service provided by an embodiment of the present application, as shown in FIG. 3, the process of accessing a private network service includes the following steps.

Step 301: a user initiates a public network session establishment request.

The SMF may receive the session establishment request initiated by a user equipment.

Step 302: policy information is requested.

After receiving the public network session establishment request initiated by the user, the SMF may request the PCF to issue the policy information.

Step 303: the policy information is issued.

After receiving the request from the SMF, the PCF issues the policy information to the SMF, wherein the policy information includes relevant information for supporting private network services.

Step 304: the policy information is identified and cached.

After receiving the policy information issued by the PCF, the SMF may construct a detection rule according to the relevant information of private network services, the detection rule is used to identify services specific to a private network.

Step 305: the establishment of a UPF is notified and the detection rule is installed.

The SMF initiates a UPF establishment request to establish a UPF, and the detection rule is carried in the UPF establishment request, after the UPF is established and the detection rule is installed, the UPF sends an establishment response message to the SMF.

Step 306: the process of establishment of a public network session is completed.

Specifically, after the UPF is established, the establishment of the public network session is completed.

Step 307: a private network service packet is received.

The UPF may receive a private network service packet sent by a user, the private network service packet is used to access a private network service.

Step 308: the service packet is matched according to the detection rule.

After receiving the private network service packet sent by the user, the UPF may match the private network service packet with the detection rule, if the matching is successful, the private network service needs to be accessed by the user is identified.

Step 309: the SMF is notified that there is a private network service packet.

The UPF sends a notification to the SMF, so as to indicate that this user needs to access a private network service, that is, there is a private network service packet.

Step 310: a private network session establishment request is triggered.

The SMF receives the notification sent by the UPF and determines that private network service diversion is required to be performed, which will trigger the establishment of a new private network session, so as to clear a data channel for private network services.

Step 311: a private network session establishment request is sent.

The SMF sends a PFCP session establishment request to the UPF, the PFCP session establishment request has an extended field, such as the RelatedUpfSeid in the table below, he extended field carries a Seid of a public network session, after receiving the PFCP session establishment request, the UPF selects the PFU where the RelatedUpfSeid is located to establish a private network session, so as to ensure that the public network session and the private network session are on the same PFU.

| Cell | Type | Condition | Explanation |
|---|---|---|---|
| RelatedUpfSeid | WORD64 | C condition (optional) | When a private network session is established, an associated public network session UPF Seid is recorded. |

Step 312: a private network session establishment response message is replied.

The UPF replies to the SMF with a PFCP session establishment response message.

Step 313: the process of establishment of the private network session is continued.

After the private network session is completed, the SMF reports that the establishment of the private network UPF is completed, and private network services are available.

Step 314: a private network service packet is forwarded.

After the establishment of a private network session is completed, the private network service packet may be forwarded to a private network service server by the private network session in the UPF.

In this way, the public network session for receiving private network service packets and the private network session for forwarding private network service packets are both established on the same PFU, that is, located on the same PFU, private network service packets may be received by the public network session, and private network service packets may be forwarded by the private network session, thereby avoiding the forwarding of private network service packets within the UPF, which in turns avoids loss within the UPF, solves the problem of serious performance loss of the UPF, and improves the performance of the UPF.

It should be noted that the session establishment method provided in the embodiments of the present application may be performed by a session establishment apparatus, or a control module for performing the session establishment method in the session establishment apparatus. In an embodiment of the present application, the session establishment apparatus that performs the session establishment method is taken as an example to illustrate the session establishment apparatus provided in the embodiments of the present application.

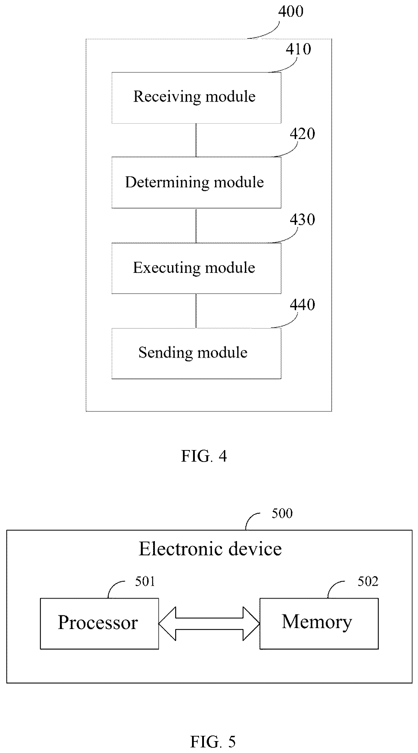

FIG. 4 is a schematic structural diagram of a session establishment apparatus according to an embodiment of the present application. As shown in FIG. 4, the session establishment apparatus 400 includes a receiving module 410, a determining module 420, an executing module 430 and a sending module 440.

The receiving module 410 is used to receive an establishment request message of a second packet forwarding control protocol (PFCP) session, wherein the establishment request message of the second PFCP session carries information of a first PFCP session, and the first PFCP session and the second PFCP session have an association relationship; the determining module 420 is used to determine a first packet forwarding unit (PFU) in a UPF corresponding to the first PFCP session according to the information of the first PFCP session; the executing module 430 is used to determine the first PFU as a second PFU in a UPF corresponding to the second PFCP session; and the sending module 440 is used to send an establishment response message of the second PFCP session carrying information of the second PFU.

In one implementation, a first field in the information of the first PFCP session is used to indicate that a second field of the first PFCP session is associated with a third field of the second PFCP session.

In one implementation, the first PFCP session is a public network PFCP session of a user, and the second PFCP session is a private network PFCP session of the user.

In one implementation, the receiving module is further used to receive a detection rule for identifying a private network service; receive a service packet sent by the user; and send a target notification to a session management function (SMF) in the case where the service packet sent by the user matches the detection rule, the establishment request message of the second PFCP session is sent by the SMF after receiving the target notification.

In one implementation, the sending module 400 is further used to forward the service packet by the second PFCP session.

The session establishment apparatus in the embodiments of the present application may be an apparatus, or a component, an integrated circuit or a chip in an equipment. The apparatus may be a mobile electronic device or a non-mobile electronic device. By way of example, the mobile electronic device may be a cellphone, a tablet computer, a laptop computer, a PDA, an in-vehicle electronic device, a wearable device, an ultra-mobile personal computer (UMPC), a netbook, or a personal digital assistant (PDA), etc.; the non-mobile electronic device may be a server, a network attached storage (NAS), a personal computer (PC), a television (TV), a teller machine, or a self-service machine, etc., which is not specifically limited in the embodiments of the present application.

The session establishment apparatus in the embodiments of the present application may be an apparatus with an operating system. The operating system may be an Android operating system, an iOS operating system, or other possible operating systems, which is not specifically limited in the embodiments of the present application.

The session establishment apparatus provided by the embodiments of the present application can implement the various processes implemented by the method embodiments of FIGS. 1-2, which will not be repeated here to avoid repetition.

Optionally, as shown in FIG. 5, an embodiment of the present application further provides an electronic device 500, which includes a processor 501 and a memory 502, the memory 502 stores a program or instruction that is executable on the processor 501, and the program or instruction, when executed by the processor 501, implements the following steps: receiving an establishment request message of a second packet forwarding control protocol (PFCP) session, wherein the establishment request message of the second PFCP session carries information of a first PFCP session, and the first PFCP session and the second PFCP session have an association relationship; according to the information of the first PFCP session, determining a first packet forwarding unit (PFU) in a UPF corresponding to the first PFCP session; determining the first PFU as a second PFU in a UPF corresponding to the second PFCP session; and sending an establishment response message of the second PFCP session carrying information of the second PFU.

In one implementation, a first field in the information of the first PFCP session is used to indicate that a second field of the first PFCP session is associated with a third field of the second PFCP session.

In one implementation, the first PFCP session is a public network PFCP session of a user, and the second PFCP session is a private network PFCP session of the user.

In one implementation, before receiving the establishment request message of the second packet forwarding control protocol (PFCP) session, a detection rule for identifying a private network service is received; a service packet sent by the user is received; and a target notification is sent to a session management function (SMF) where the service packet sent by the user matches the detection rule, the establishment request message of the second PFCP session is sent by the SMF after receiving the target notification.

In one implementation, the service packet is forwarded by the second PFCP session.

For the specific execution steps, reference may be made to various steps in the above-mentioned embodiments of the session establishment method, and the same technical effect can be achieved, which will not be repeated here to avoid repetition.

It should be noted that the electronic device in the embodiments of the present application includes a server, a terminal or other devices other than a terminal.

The above-mentioned structure of the electronic device does not constitute a limitation on the electronic device, the electronic device may include more or fewer components than shown in the figures, or combine certain components, or arrange the components differently, for example, an input unit may include a graphics processing unit (GPU) and a microphone, and a display unit may be configured with a display panel in the form of a liquid crystal display, an organic light-emitting diode, etc. A user input unit includes a touch panel and at least one of other input devices. The touch panel is also known as a touch screen. Other input devices may include, but are not limited to, a physical keyboard, function keys (such as a volume control key, a switch key, etc.), a trackball, a mouse, and a joystick, which will not be repeated here.

A memory may be used to store software programs as well as various data. The memory may mainly include a first storage area for storing programs or instructions and a second storage area for storing data, wherein the first storage area may store an operating system, application programs or instructions required for at least one function (such as a sound playback function, an image playback function, etc.), etc. In addition, the memory may include a volatile memory or a non-volatile memory; alternatively, the memory may include both volatile and non-volatile memory. Wherein the non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), a static random access memory (SRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synch link dynamic random access memory (SLDRAM), and a direct random access memory (DRRAM).

The processor may include one or more processing units; optionally, the processor integrates an application processor and a modem processor, wherein the application processor mainly processes operations related to operating systems, user interfaces, and application programs, and the modem processor mainly processes wireless communication signals, such as a baseband processor. It can be understood that the above-mentioned modem processor may not be integrated into the processor.

An embodiment of the present application further provides a readable storage medium, the readable storage medium stores a program or instruction thereon, and the program or instruction, when executed by a processor, implements various processes of embodiments of the session establishment method, and the same technical effect can be achieved, which will not be repeated here to avoid repetition.

The processor is the processor in the electronic device described in the above-mentioned embodiments. The readable storage medium includes a computer readable storage medium, such as a ROM, a RAM, a magnetic disk, or an optical disk.

It should be noted that, as used herein, the terms "include", "comprise" or any other variations thereof are intended to cover a non-exclusive inclusion, such that a process, method, article, or apparatus that includes a series of elements not only includes those elements, but also includes other elements that are not explicitly listed, or further includes elements that are inherent to the process, method, article, or apparatus. Without further limitations, an element limited by "including a..." does not exclude the presence of other identical elements in the process, method, article, or device that includes the element. In addition, it should be noted that the scope of the method and device in embodiments of this application is not limited to perform functions in the order shown or discussed, but may also include performing functions in a substantially simultaneous manner or in an opposite order according to the functions involved, for example, the described methods may be performed in a different order than described, and various steps may be added, omitted, or combined. Additionally, features described with reference to certain examples may be combined in other examples.

With the description of the above implementations, those skilled in the art can clearly understand that the above implementation methods can be effected via software and necessary general hardware platforms, as well as hardware, in many cases, the former is the preferred implementation. Based on such understanding, the technical solution of the present application essentially or the part contributing to the prior art may be embodied in the form of a computer software product, the computer software product is stored in a storage medium (such as a ROM/RAM, a magnetic disk, and an optical disk), and includes a number of instructions for instructing a terminal (which may be a mobile phone, a computer, a server, or a network device) to execute the methods described in various embodiments of this application.

The embodiments of the application are described above in conjunction with the accompanying drawings, but the application is not limited to the above-mentioned particular embodiments that are merely illustrative rather than limiting, a wide variety of forms can be made by a person skilled in the art under teachings of the application without departing from the spirit and scope of the application, and such forms all fall within the scope of the claims.

## Claims

1. A session establishment method applied to a user plane function called UPF device, comprising:
receiving an establishment request message of a second packet forwarding control protocol called PFCP session, wherein the establishment request message of the second PFCP session carries information of a first PFCP session, and the first PFCP session and the second PFCP session have an association relationship;
determining a first packet forwarding unit called PFU in a UPF corresponding to the first PFCP session according to the information of the first PFCP session;
determining the first PFU as a second PFU in a UPF corresponding to the second PFCP session; and
sending an establishment response message of the second PFCP session carrying information of the second PFU.

2. The method according to claim 1, wherein a first field in the information of the first PFCP session is used to indicate that a second field of the first PFCP session is associated with a third field of the second PFCP session.

3. The method according to claim 1, wherein the first PFCP session is a public network PFCP session of a user, and the second PFCP session is a private network PFCP session of the user.

4. The method according to claim 3, wherein before receiving the establishment request message of the second packet forwarding control protocol called PFCP session, the method further comprises:
receiving a detection rule for identifying a private network service;
receiving a service packet sent by the user; and
sending a target notification to a session management function called SMF where the service packet sent by the user matches the detection rule, the establishment request message of the second PFCP session is sent by the SMF after receiving the target notification.

5. The method according to claim 4, wherein the method further comprises:
forwarding the service packet by the second PFCP session.

6. A session establishment apparatus applied to a user plane function called UPF device, comprising:
a receiving module for receiving an establishment request message of a second packet forwarding control protocol called PFCP session, wherein the establishment request message of the second PFCP session carries information of a first PFCP session, and the first PFCP session and the second PFCP session have an association relationship;
a determining module for determining a first packet forwarding unit called PFU in a UPF corresponding to the first PFCP session according to the information of the first PFCP session;
an executing module for determining the first PFU as a second PFU in a UPF corresponding to the second PFCP session; and
a sending module for sending an establishment response message of the second PFCP session carrying information of the second PFU.

7. An electronic device, comprising a processor, a memory, and a program or instruction that is stored on the memory and is executable on the processor, and the program or instruction, when executed by the processor, implements the steps of the session establishment method according to any one of claims 1-5.

8. A readable storage medium, the readable storage medium stores a program or instruction thereon, and the program or instruction, when executed by the processor, implements steps of the session establishment method according to any one of claims 1-5.
